# EUROPEAN PATENT APPLICATION

(11) **EP 4 723 471 A1**
(43) Date of publication of application: **08.04.2026**
(21) Application number: 23939624.5
(22) Date of filing: 31.05.2023
(51) Int. Cl.: H02P 27/08

(54) **MOTOR CONTROL DEVICE, ELECTRIC POWER STEERING DEVICE, AND VEHICLE**

(71) Applicant: Mitsubishi Electric Mobility Corporation, Tokyo 100-8310 (JP)
(72) Inventor: NATSUHARA, Hiroya, Tokyo 100-8310 (JP)
(74) Representative: Hoffmann Eitle
(86) International application number: PCT/JP2023/020208
(87) International publication number: WO 2024/247146

(57) **Abstract**

A motor control device according to the present disclosure includes an inverter circuit including a plurality of high-potential-side switching elements, a plurality of low-potential-side switching elements, and a plurality of current sensors, a power control unit configured to control the plurality of high-potential-side switching elements and the plurality of low-potential-side switching elements based on a duty value, and an abnormality detection unit configured to detect an abnormality by comparing a sum of current values of the plurality of phases detected by using the plurality of current sensors when the plurality of low-potential-side switching elements are in a conductive state, with a first threshold value and to determine a failure based on the number of times the abnormality is detected, in which the abnormality detection unit compares the sum of the current values with the first threshold value, for each first cycle that is a current value detection cycle, and, when the abnormality is detected by the comparison, causes the power control unit to generate a limited duty value that limits the duty value to be less than or equal to a predetermined upper limit value and to perform duty limit processing that controls the plurality of high-potential-side switching elements and the plurality of low-potential-side switching elements based on the limited duty value.

## Description

### Technical Field

The present disclosure relates to a motor control device, an electric power steering device, and a vehicle.

### Background Art

A motor control device that controls a motor includes an inverter circuit having a high-potential-side switching element and a low-potential-side switching element, and a power control unit that controls the inverter circuit. A current sensor is connected to the low-potential-side switching element, and a current value detected by the current sensor is usually used for controlling the inverter circuit. Patent Document 1 and Patent Document 2 disclose a configuration in which an abnormality detection unit that detects an abnormality based on the sum of the current values detected by using the current sensor is provided in the motor control device.

### Citation List

### Patent Documents

Patent Document 1: Japanese Patent No. 6897025
Patent Document 2: Japanese Unexamined Patent Application, First Publication No. 2012-157140

### Summary of Invention

### Problem to be Solved by the Invention

When an output of an inverter circuit is high, in a case where a switching signal indicating a high ON DUTY value is input to the inverter circuit, conduction time of a low-potential-side switching element is shortened, and there are cases where it is impossible to have the current value detected by the current sensor. **In** such case, it is not possible to detect an abnormality based on the sum of the current values. **In** Patent Document 1, the inverter circuit is controlled in a way that insures that the conduction time of the low-potential-side switching element is greater than or equal to a predetermined time. **In** Patent Document 1, since the above control is performed even under normal conditions in which the abnormality is not detected, the output of the motor during normal operation is decreased.

In Patent Document 2, the abnormality detection unit stores the current value over a predetermined number of current detection cycles, and, after the predetermined number of current detection cycles elapses, collectively determines the abnormality based on the sum of the current values for the stored current values. In Patent Document 2, there is a time lag from the occurrence of the failure to the detection of the abnormality, and it is difficult to detect the abnormality without delay. Even when the output of the inverter circuit is high, it is required that the motor detect abnormality with high accuracy and without delay based on the sum of the current values, while suppressing discomfort due to vibration or noise generated by the motor.

In view of the above circumstances, an object of the present disclosure is to provide a motor control device, an electric power steering device, and a vehicle capable of preventing a decrease in an output of a motor during normal operation, and detecting an abnormality based on a sum of current values with high accuracy and without delay while discomfort due to vibration and/or noise generated by the motor are suppressed, even when an output of an inverter circuit is high.

### Means to Solve the Problem

An aspect of a motor control device according to the present disclosure is a motor control device which includes an inverter circuit configured to supply power to a motor having a winding wire of a plurality of phases, the inverter circuit including a plurality of high-potential-side switching elements and a plurality of low-potential-side switching elements that are provided corresponding to each phase of the plurality of phases, and a plurality of current sensors that are each connected to the plurality of low-potential-side switching elements, a power control unit configured to control the plurality of high-potential-side switching elements and the plurality of low-potential-side switching elements based on a duty value, and an abnormality detection unit configured to detect an abnormality by comparing the sum of current values of the plurality of phases detected by using the plurality of current sensors when the plurality of low-potential-side switching elements are in a conductive state, with a first threshold value to determine a failure based on the number of times the abnormality is detected. The abnormality detection unit compares the sum of the current values with the first threshold value for each first cycle that is a current value detection cycle. When an abnormality is detected by comparing the sum of the current values with the first threshold value, the abnormality detection unit causes the power control unit to generate a limited duty value that limits the duty value to be less than or equal to a predetermined upper limit value such that a time during which all of the plurality of low-potential-side switching elements are in the conductive state is greater than or equal to a time required for detecting the current value, and causes the power control unit to perform duty limit processing that is processing of controlling the plurality of high-potential-side switching elements and the plurality of low-potential-side switching elements based on the limited duty value.

An aspect of an electric power steering device according to the present disclosure is an electric power steering device which may include the aforementioned motor control device, the motor configured to assist steering of a steering wheel, and a torque sensor configured to detect a steering torque caused by steering of the steering wheel, wherein the motor control device controls driving of the motor according to the steering torque detected by the torque sensor.

An aspect of a vehicle according to the present disclosure is a vehicle which may include the aforementioned electric power steering device, and a notification unit configured to notify of an occurrence of a failure when the abnormality detection unit confirms the failure.

### Effects of the Invention

According to the present disclosure, it is possible to prevent a decrease in an output of a motor during normal operation, and to detect an abnormality based on a sum of current values with high accuracy and without delay while discomfort due to vibration or noise generated by the motor is suppressed, even though an output of an inverter circuit is high.

### Brief Description of Drawings

[FIG. 1] An overall configuration diagram of a motor control device according to a first embodiment.
[FIG. 2] A block diagram of a power control unit according to the first embodiment.
[FIG. 3] A diagram for describing a generation principle of a switching signal in a PWM generation unit according to the first embodiment.
[FIG. 4] A diagram representing an example of a duty value input to the power control unit according to the first embodiment.
[FIG. 5] A diagram representing an example of a duty value input to the PWM generation unit according to the first embodiment.
[FIG. 6] A flowchart representing a flow of processing performed by an abnormality detection unit according to the first embodiment.
[FIG. 7] A schematic configuration diagram of an electric power steering device according to a second embodiment.
[FIG. 8] A diagram representing an example of a duty value input to a PWM generation unit according to a third embodiment.
[FIG. 9] A diagram representing an example of a duty value input to a PWM generation unit according to the third embodiment.
[FIG. 10] A diagram representing an example of a duty value input to a PWM generation unit according to a fourth embodiment.

### Description of Embodiments

Hereinafter, embodiments of the present disclosure are described with reference to the drawings. The scope of the present disclosure is not limited to the following embodiment and may be modified in any within the technical scope of the present disclosure.

### First Embodiment.

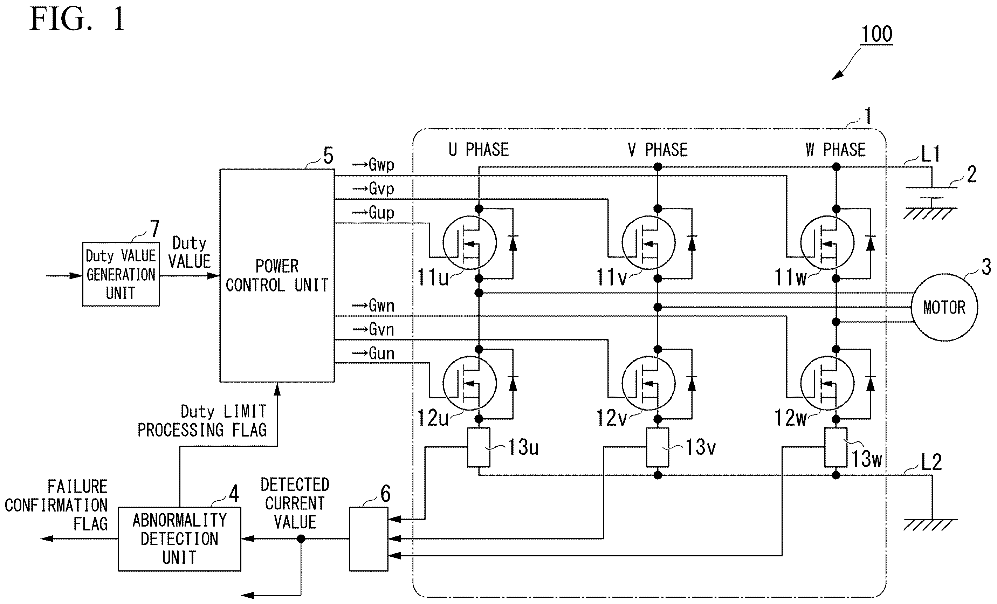

FIG. 1 is an overall configuration diagram of a motor control device 100 according to a first embodiment. The motor control device 100 includes an inverter circuit 1, an abnormality detection unit 4, a power control unit 5, a current value acquisition unit 6, and a duty value generation unit 7. The motor control device 100 controls a motor 3 based on a control command input from an outside of the motor control device 100.
As the motor 3, a motor that is rotationally driven by multiphase alternating current may be applied. **In** the first embodiment, a case where the motor 3 is a three-phase brushless motor which includes a three-phase winding wire configured from a U-phase winding wire, a V-phase winding wire, and a W-phase winding wire is described as an example.

A direct current voltage is supplied from a direct current power supply unit 2 to the inverter circuit 1. The inverter circuit 1 applies an alternating current voltage to the three-phase winding wire of the motor 3 based on the direct current voltage output from the direct current power supply unit 2.

The inverter circuit 1 includes high-potential-side switching elements 11u, 11v, and 11w, low-potential-side switching elements 12u, 12v, and 12w, and current sensors 13u, 13v, and 13w. In addition, the inverter circuit 1 includes a power supply line L1 connected to a positive electrode of the direct current power supply unit 2 and a ground line L2 connected to a negative electrode of the direct current power supply unit 2.
The high-potential-side switching element 11u, the low-potential-side switching element 12u, and the current sensor 13u are provided corresponding to the U phase of the motor 3. The high-potential-side switching element 11v, the low-potential-side switching element 12v, and the current sensor 13v are provided corresponding to the V phase of the motor 3. The high-potential-side switching element 11w, the low-potential-side switching element 12w, and the current sensor 13w are provided corresponding to the W phase of the motor 3. In the explanations below, the high-potential-side switching elements 11u, 11v, and 11w may collectively and simply be referred to as a "high-potential-side switching element 11". Similarly, the low-potential-side switching elements 12u, 12v, and 12w may collectively and simply be referred to as a "low-potential-side switching element 12". The current sensors 13u, 13v, and 13w may collectively and simply be referred to as a "current sensor 13".

The high-potential-side switching elements 11u, 11v, and 11w are connected to the power supply line L1. The low-potential-side switching elements 12u, 12v, and 12w are each connected to the high-potential-side switching elements 11u, 11v, and 11w, and are each connected to the ground line L2 via the current sensors 13u, 13v, and 13w. A connection point between the high-potential-side switching element 11u and the low-potential-side switching element 12u is connected to the U-phase winding wire of the motor 3. A connection point between the high-potential-side switching element 11v and the low-potential-side switching element 12v is connected to the V phase winding wire of the motor 3. A connection point between the high-potential-side switching element 11w and the low-potential-side switching element 12w is connected to the W-phase winding wire of the motor 3.

Switching signals Gup, Gvp, and Gwp output from the power control unit 5 are each input to the high-potential-side switching elements 11u, 11v, and 11w. Switching signals Gun, Gvn, and Gwn output from the power control unit 5 are each input to the low-potential-side switching elements 12u, 12v, and 12w. The inverter circuit 1 performs the chopper control of the high-potential-side switching elements 11u, 11v, and 11w and the low-potential-side switching elements 12u, 12v, and 12w based on the switching signals Gup, Gvp, Gwp, Gun, Gvn, and Gwn. Specifically, the high-potential-side switching elements 11u, 11v, and 11w and the low-potential-side switching elements 12u, 12v, and 12w are in an ON state (conductive state) or are in an OFF state (non-conductive state) by the switching signals Gup, Gvp, Gwp, Gun, Gvn, and Gwn. For example, the high-potential-side switching element 11u is in the ON state when the switching signal Gup is an "ON command (= 1)", and the high-potential-side switching element 11u is in the OFF state when the switching signal Gup is an "OFF command (= 0)". The same applies to the other switching elements 11v, 11w, 12u, 12v, and 12w. As described above, the switching signal Gup, Gvp, Gwp, Gun, Gvn, and Gwn switches the ON state and the OFF state of the switching elements 11u, 11v, 11w, 12u, 12v, and 12w, so that the inverter circuit 1 causes a current to flow through the three-phase winding wire of the motor 3. As a result, motor torque is generated.

The high-potential-side switching elements 11u, 11v, and 11w and the low-potential-side switching elements 12u, 12v, and 12w are, for example, field effect transistors (FET). The switching elements 11u, 11v, 11w, 12u, 12v, and 12w may be any device, so long as it is possible to switch between the ON state and the OFF using a switching signal. For example, the switching elements 11u, 11v, 11w, 12u, 12v, and 12w may be a thyristor, a bipolar transistor, or the like.

The current sensors 13u, 13v, and 13w are each disposed between the low-potential-side switching elements 12u, 12v, and 12w and the ground line L2. The current sensors 13u, 13v, and 13w are each connected in series to the low-potential-side switching elements 12u, 12v, and 12w. The current sensors 13u, 13v, and 13w each detect current values flowing through the low-potential-side switching elements 12u, 12v, and 12w (the current sensors 13u, 13v, and 13w). The current sensors 13u, 13v, and 13w are, for example, shunt resistors. The current sensors 13u, 13v, and 13w may detect the current values flowing through the low-potential-side switching elements 12u, 12v, and 12w. For example, the current sensors 13u, 13v, and 13w may be current transformers (CT), Hall elements, or the like.

The current value detected by the current sensors 13u, 13v, and 13w is output to the current value acquisition unit 6. The current value acquisition unit 6 includes a sample-and-hold circuit. The current value acquisition unit 6 acquires current values Iu, Iv, and Iw by performing sample-and-hold processing of holding the current values detected by the current sensors 13u, 13v, and 13w at predetermined sample times, and outputs the acquired current values Iu, Iv, and Iw to the abnormality detection unit 4 or the like. The current value Iu is a current value of the U phase detected by using the current sensor 13u, the current value Iv is a current value of the V phase detected by using the current sensor 13v, and the current value Iw is a current value of the W phase detected by using the current sensor 13w. The sample time is a time that is arrived at during each predetermined current detection cycle Ti (first cycle). The sample time is set to a time at which all of the low-potential-side switching elements 12u, 12v, and 12w are in the ON state. The current values Iu, Iv, and Iw are used, for example, in current feedback control of the motor 3. In addition, the current values Iu, Iv, and Iw are used in the detection of an abnormality in the abnormality detection unit 4.

The abnormality detection unit 4 detects an abnormality in the power supply path for supplying power to the motor 3 based on the sum of the current values Iu, Iv, and Iw detected by using the current sensors 13u, 13v, and 13w. In addition, the abnormality detection unit 4 determines a failure based on the number of times the abnormality is detected. As examples of the factors of the failure, a short-circuit failure of the high-potential-side switching elements 11u, 11v, and 11w, a short-circuit failure between the wiring of the motor 3 and the wiring of the direct current power supply unit 2, a short-circuit failure between the wiring of the motor 3 and the wiring of the ground, a failure of the current sensors 13u, 13v, and 13w, and a failure of the current value acquisition unit 6 may be mentioned.

The detection of the abnormality by the abnormality detection unit 4 is described. When the power supply path for supplying power to the motor 3 is normal, the sum of the current values Iu, Iv, and Iw of the three phases is theoretically "0" (Iu + Iv + Iw = 0). The abnormality detection unit 4 calculates an absolute value Is (Is = |Iu + Iv + Iwl) of the sum of the current values Iu, Iv, and Iw input from the current value acquisition unit 6, and compares the absolute value Is with a predetermined abnormality detection threshold value Ith (first threshold value). When the absolute value Is is less than or equal to the abnormality detection threshold value Ith, the abnormality detection unit 4 determines that there is no abnormality. When the absolute value Is is larger than the abnormality detection threshold value Ith, the abnormality detection unit 4 determines that there is an abnormality (in other words, detects the abnormality). As described above, in a case where the power supply path is normal, the sum of the current values Iu, Iv, and Iw is "0", so that it is ideal to set the abnormality detection threshold value Ith to "0". However, since the detection of the current value by the current sensor 13 may include an error, the abnormality detection threshold value Ith is set to a value slightly larger than "0".

The abnormality detection unit 4 outputs a duty limit processing flag corresponding to the detection result to the power control unit 5. Specifically, when an abnormality is detected, the abnormality detection unit 4 sets the duty limit processing flag to "true" and outputs the flag to the power control unit 5.

In addition, in order to prevent faulty determination, the abnormality detection unit 4 does not confirm the failure using only one detection of the abnormality, but confirms the failure using a plurality of detections of the abnormality. Details of the failure determination are described later on. The abnormality detection unit 4 outputs a failure confirmation flag to an external control device or the like when the failure is confirmed. As a result, processing of notifying the user of the motor 3 of the occurrence of the failure, processing of stopping the motor 3 according to a predetermined process, or the like is performed.

A control command is input to the duty value generation unit 7 from the outside. The duty value generation unit 7 generates a duty value based on the control command. The duty value generation unit 7 outputs the duty value to the power control unit 5. The duty value includes a duty value of the U phase, a duty value of the V phase, and a duty value of the W phase. The duty value of the U phase corresponds to a voltage to be applied to the U phase winding wire of the motor 3. The duty value of the U phase indicates a ratio of a time for which the high-potential-side switching element 11u of the U phase is energized with respect to one cycle of the signal (a carrier cycle Tc of a carrier triangular wave C described below), and takes a range of 0 to 1 (0% to 100%). The duty value of the V phase corresponds to a voltage that is to be applied to the V phase winding wire of the motor 3. The duty value of the V phase indicates a ratio of a time for which the high-potential-side switching element 11v of the V phase is energized with respect to one cycle of the signal, and takes a range of 0 to 1 (0% to 100%). The duty value of the W phase corresponds to a voltage to be applied to the W phase winding wire of the motor 3. The duty value of the W phase indicates a ratio of a time for which the high-potential-side switching element 11w of the W phase is energized with respect to one cycle of the signal, and takes a range of 0 to 1 (0% to 100%).

The power control unit 5 receives the duty value from the duty value generation unit 7. The duty limit processing flag is input to the power control unit 5 from the abnormality detection unit 4. The power control unit 5 drives the inverter circuit 1 based on the duty value and the duty limit processing flag.

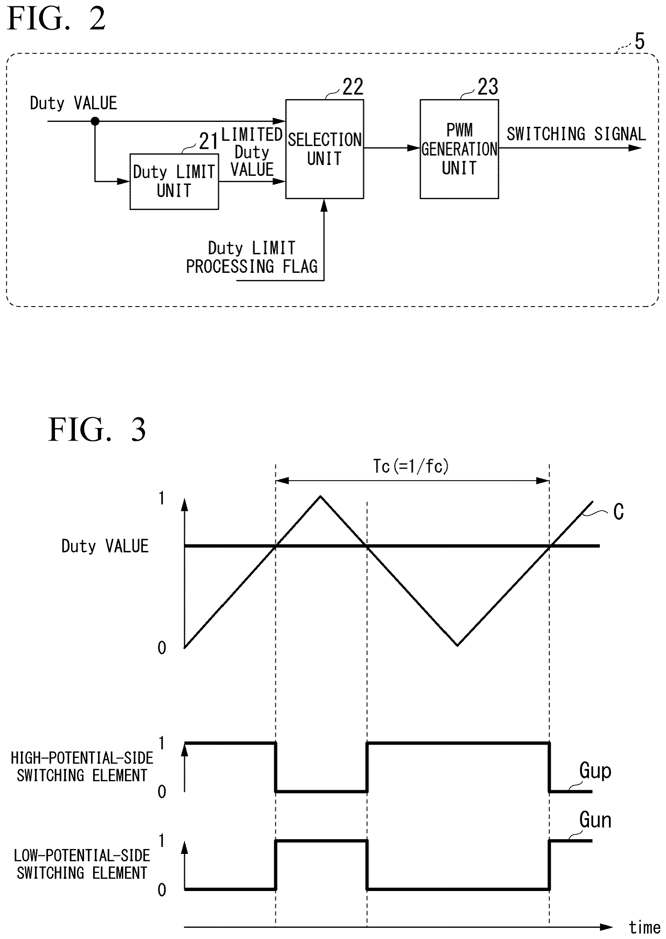

FIG. 2 is a block diagram of the power control unit 5. As shown on FIG. 2, the power control unit 5 includes a duty limit unit 21, a selection unit 22, and a PWM generation unit 23.

The duty value is input to the duty limit unit 21 from the duty value generation unit 7. The duty limit unit 21 generates a limited duty value obtained by limiting the duty value input from the duty value generation unit 7 to be less than or equal to a predetermined limit threshold value Duty_th (upper limit value). In the present embodiment, the duty limit unit 21 generates the limited duty value by performing clipping processing of matching the duty value larger than the limit threshold value Duty_th with the limit threshold value Duty_th. The duty limit unit 21 outputs the limited duty value to the selection unit 22.

The duty value is input to the selection unit 22 from the duty value generation unit 7. The limited duty value is input to the selection unit 22 from the duty limit unit 21. The duty limit processing flag is input from the abnormality detection unit 4 to the selection unit 22. The selection unit 22 selects the duty value to be output to the PWM generation unit 23 based on the duty limit processing flag. Specifically, when the duty limit processing flag indicates "true", the selection unit 22 outputs the limited duty value generated by the duty limit unit 21 to the PWM generation unit 23. When the duty limit processing flag indicates "false", the selection unit 22 outputs the duty value output from the duty value generation unit 7 (in other words, the duty value that is not limited to be less than or equal to the limit threshold value Duty_th) to the PWM generation unit 23. **In** the following explanations, the limited duty value or the duty value output from the selection unit 22 to the PWM generation unit 23 may collectively and simply be referred to as a "duty value".

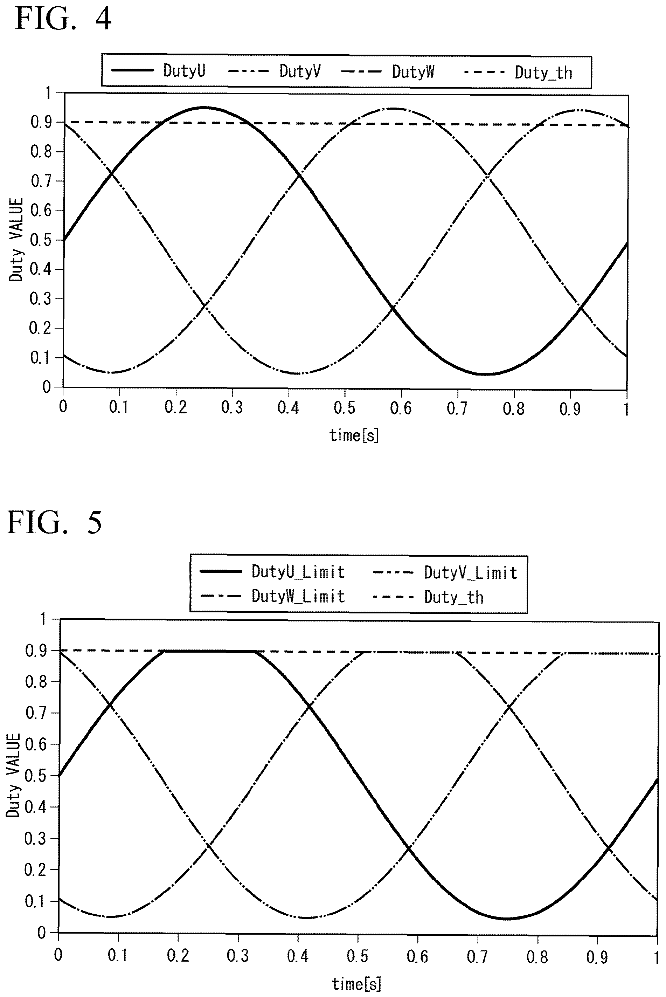

FIG. 4 is a diagram showing an example of a duty value input from the duty value generation unit 7 to the power control unit 5. In other words, FIG. 4 is a diagram showing an example of the duty value input to the PWM generation unit 23 when the duty limit processing flag indicates "false". In FIG. 4, a horizontal axis indicates time, and a vertical axis indicates a duty value. In the examples shown on the drawing, the duty value of the U phase is denoted by "DutyU", the duty value of the V phase is denoted by "DutyV", and the duty value of the W phase is denoted by "DutyW". As shown on FIG. 4, in the present embodiment, the duty value of each phase changes in a sinusoidal wave shape.

FIG. 5 is a diagram showing an example of the limited duty value generated by the duty limit unit 21. In other words, FIG. 5 is a diagram showing an example of the duty value input to the PWM generation unit 23 when the duty limit processing flag indicates "true". In FIG. 5, a horizontal axis indicates time, and a vertical axis indicates a duty value. In the example shown on the drawing, the limited duty value of the U phase is denoted by "DutyU_Limit", the limited duty value of the V phase is denoted by "DutyV_Limit", and the limited duty value of the W phase is denoted by "DutyW_Limit".

The PWM generation unit 23 generates the switching signals Gup, Gvp, Gwp, Gun, Gvn, and Gwn, which are control signals by pulse width modulation (PWM) control, based on the duty value input from the selection unit 22, and outputs the switching signals to the inverter circuit 1. In other words, the PWM generation unit 23 controls the high-potential-side switching elements 11u, 11v, and 11w and the low-potential-side switching elements 12u, 12v, and 12w based on the duty value input from the selection unit 22. Specifically, when the duty limit processing flag indicates "true", the PWM generation unit 23 controls the high-potential-side switching elements 11u, 11v, and 11w and the low-potential-side switching elements 12u, 12v, and 12w based on the limited duty value generated by the duty limit unit 21. When the duty limit processing flag indicates "false", the PWM generation unit 23 controls the high-potential-side switching elements 11u, 11v, and 11w and the low-potential-side switching elements 12u, 12v, and 12w based on the duty value output from the duty value generation unit 7.

As described above, when the duty limit processing flag indicating "true" is input from the abnormality detection unit 4, the power control unit 5 generates the limited duty value obtained by limiting the duty value output from the duty value generation unit 7 to be less than or equal to the limit threshold value Duty_th, and performs duty limit processing that is processing of controlling the high-potential-side switching elements 11u, 11v, and 11w and the low-potential-side switching elements 12u, 12v, and 12w based on the limited duty value.

The power control unit 5 may perform the duty limit processing by changing the processing or the threshold value in the duty limit unit 21 corresponding to the duty limit processing flag without using the selection unit 22. For example, when the duty limit processing flag input from the abnormality detection unit 4 indicates "true", the duty limit unit 21 generates the limited duty value obtained by limiting the duty value to be less than or equal to the limit threshold value Duty_th, and outputs the limited duty value to the PWM generation unit 23. When the duty limit processing flag input from the abnormality detection unit 4 indicates "false", the duty limit unit 21 does not perform processing on the duty value output from the duty value generation unit 7, and outputs the duty value output from the duty value generation unit 7 to the PWM generation unit 23 as is. The PWM generation unit 23 controls the high-potential-side switching elements 11u, 11v, and 11w and the low-potential-side switching elements 12u, 12v, and 12w based on the duty value input from the duty limit unit 21.

A method in which the PWM generation unit 23 generates the switching signal is described with reference to FIG. 3. Hereinafter, the U phase is described as representing all three phases of the U phase, the V phase, and the W phase. In other words, the following description is similarly applied to the V phase and the W phase.

FIG. 3 shows time-series changes of the duty value of the U phase, the carrier triangular wave C of the carrier cycle Tc (a carrier frequency fc), and the switching signals Gup and Gun of the U phase. In FIG. 3, a horizontal axis represents time, and a vertical axis represents signal level. The carrier frequency fc is, for example, 20 kHz. The duty value of the U phase is in a range of 0 to 1 (0% to 100%). In addition, the carrier triangular wave C also has a range of 0 to 1 (0% to 100%). The PWM generation unit 23 generates the switching signals Gup and Gun of the U phase by comparing the duty value of the U phase with the carrier triangular wave C.

Specifically, when the duty value of the U phase is larger than the carrier triangular wave C, the PWM generation unit 23 sets the switching signal Gup on the high potential side to "1" as an ON command and sets the switching signal Gun on the low potential side to "0" as an OFF command. In other words, when the duty value of the U phase is larger than the carrier triangular wave C, the high-potential-side switching element 11u of the U phase is set to the ON state, and the low-potential-side switching element 12u of the U phase is set to the OFF state. When the duty value of the U phase is smaller than the carrier triangular wave C, the PWM generation unit 23 sets the switching signal Gup on the high potential side to "0" as an OFF command and sets the switching signal Gun on the low potential side to "1" as an ON command. In other words, when the duty value of the U phase is smaller than the carrier triangular wave C, the high-potential-side switching element 11u of the U phase is set to the OFF state, and the low-potential-side switching element 12u of the U phase is set to the ON state. Strictly speaking, in order to prevent the high-potential-side switching element 11u and the low-potential-side switching element 12u from being in the ON state at the same time, a dead time in which both the high-potential-side switching element 11u and the low-potential-side switching element 12u are in the OFF state for a short amount of time is provided.

The reason for performing the duty limit processing is described below with reference to FIGS. 4 and 5.

As described above, the duty value includes the duty value of the U phase, the duty value of the V phase, and the duty value of the W phase. As the voltage difference between the phases increases, the action of causing a current to flow in the three-phase winding wire of the motor 3 becomes stronger. As such, when the output of the inverter circuit 1 is large, the amplitude of the duty value is large. When a switching signal indicating a high duty value is input to the inverter circuit 1, the time during which the low-potential-side switching element 12 of the phase to which the switching signal is input is in the ON state is shortened. Here, the time required for detecting the current value by using the current sensor 13 is referred to as a current detection time. When the time during which the low-potential-side switching element 12 is in the ON state is shorter than the current detection time, it is impossible to detect the current value by the current sensor 13. For example, when the duty value exceeds the limit threshold value Duty_th, the time during which the low-potential-side switching element 12 is in the ON state is shortened, and there is a case where the current value cannot be detected by the current sensor 13.

When the power supply path for supplying power to the motor 3 is normal, the sum of the current values Iu, Iv, and Iw of the three phases is theoretically "0". Therefore, even if the detection of the current value by the current sensor 13 is impossible in only one phase of the three phases, it is possible to estimate the current value of the phase for which detection is not possible, based on the current value detected in the remaining two phases, and it is possible to control the inverter circuit 1 using the estimated current value.

On the other hand, since the abnormality detection unit 4 detects an abnormality based on the sum of the current values Iu, Iv, and Iw of the three phases, in a case where the detection of the current value by the current sensor 13 is not possible in any of the three phases, detection of the using the abnormality detection unit 4 is not possible. The abnormality detection unit 4 confirms the failure by detecting the abnormality throughout a plurality of times. In order to determine such a failure, it is necessary to detect the current value by the current sensor 13 of the three phases during the entire period of the failure determination.

In the example of FIG. 4 for example, in a period from time 0 seconds to around 0.15 seconds, the duty values of the three phases are less than or equal to the limit threshold value Duty_th. When the modulation rate is equal to the duty value of 100% or less, all of the low-potential-side switching elements 12u, 12v, and 12w are in the ON state, and an electrical angle at which the current value may be detected using the current sensor 13 of the three phases is present, so that in a case where the period during which the failure determination is performed is short, it is possible to detect the abnormality. However, when the rotation speed of the motor 3 is increased, the period of the electrical angle at which the current value is detectable by the current sensor 13 of the three phases is shortened, and the amplitude of the duty value tends to increase since the counter-electromotive force of the motor 3 acts. Therefore, in such case, it is difficult to detect the current value by the current sensor 13 of the three phases during the entire period of the failure determination.

In the present embodiment, when the duty limit processing flag indicating "true" is input from the abnormality detection unit 4, the power control unit 5 generates the limited duty value obtained by limiting the duty value to be less than or equal to the limit threshold value Duty_th, and performs the duty limit processing that is processing of controlling the high-potential-side switching elements 11u, 11v, and 11w and the low-potential-side switching elements 12u, 12v, and 12w based on the limited duty value. The limit threshold value Duty_th is set to a value such that the time during which all of the low-potential-side switching elements 12u, 12v, and 12w are in the ON state is secured to be greater than or equal to the current detection time (for example, 5 µs). The limit threshold value Duty_th is, for example, 0.9 (90%).

Since the power control unit 5 performs the duty limit processing, it is possible to insure that the time during which all of the low-potential-side switching elements 12u, 12v, and 12w are in the ON state is greater than or equal to the current detection time, so that it is possible to reliably acquire the current values Iu, Iv, and Iw of the three phases. In other words, at the time the duty limit processing is performed, it is possible to reliably detect the abnormality based on the sum of the current values Iu, Iv, and Iw of the three phases. In addition, when the duty value is less than or equal to the limit threshold value Duty_th, all of the low-potential-side switching elements 12u, 12v, and 12w are in the ON state around the time at which the carrier triangular wave C is 1. Therefore, the sample time in the current value acquisition unit 6 is set to the above-described time.

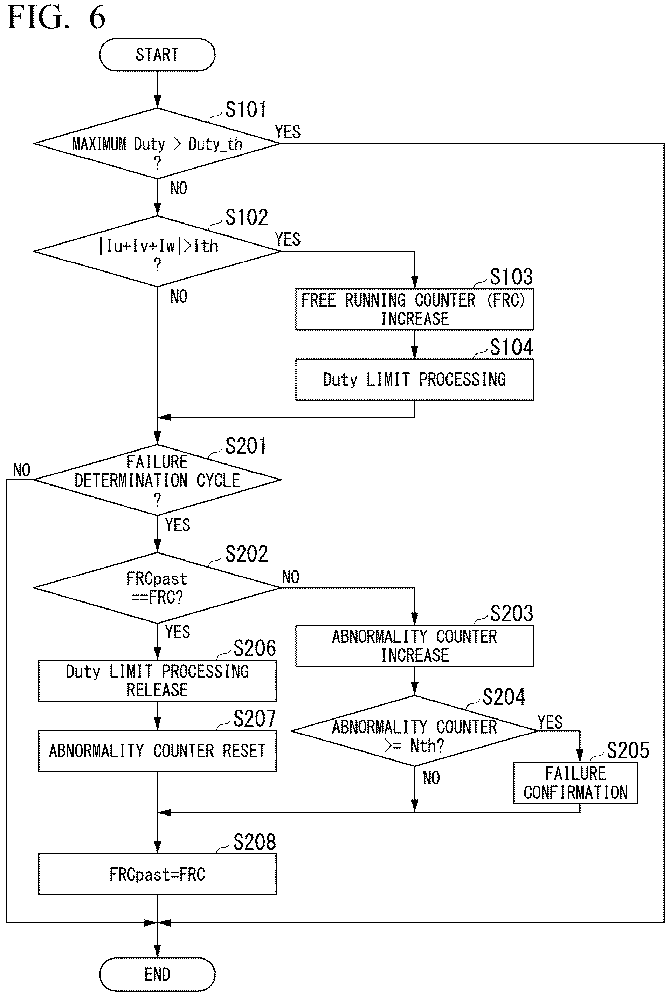

FIG. 6 is a flowchart showing a flow of processing performed by the abnormality detection unit 4. The abnormality detection processing by the abnormality detection unit 4 is performed for each current detection cycle Ti. The current detection cycle Ti is an integral multiple of the carrier cycle Tc of the carrier triangular wave C.

In a step S101, the abnormality detection unit 4 acquires the duty values of the U phase, the V phase, and the W phase, and determines whether or not the maximum value of the duty values is larger than the limit threshold value Duty_th. When the maximum value of the duty value is larger than the limit threshold value Duty_th ("YES" in the step S101), it is not possible to detect the current values Iu, Iv, and Iw of the three phases, and it is not possible to perform the determination in a step S102 in the subsequent stage, so that the present flowchart is ended.

When the maximum value of the duty value is less than or equal to the limit threshold value Duty_th ("NO" in the step S101), the processing proceeds to the step S102. In the step S102, the abnormality detection unit 4 calculates the absolute value Is (Is = |Iu + Iv + Iwl) of the sum of the current values Iu, Iv, and Iw input from the current value acquisition unit 6, and determines whether or not the absolute value Is is larger than the abnormality detection threshold value Ith.

When the absolute value Is is less than or equal to the abnormality detection threshold value Ith ("NO" in the step S102), it is determined that there is no abnormality, and the processing proceeds to a step S201.

When the absolute value Is is larger than the abnormality detection threshold value Ith ("YES" in the step S102), it is determined that there is an abnormality (the abnormality is detected), and the processing proceeds to a step S103. In the step S103, the abnormality detection unit 4 increases a free run counter (FRC) indicating the number of times the abnormality is detected by 1. After the step S103, the processing proceeds to a step S104. In the step S104, the abnormality detection unit 4 sets the duty limit processing flag to "true" and outputs the duty limit processing flag to the power control unit 5. Accordingly, the power control unit 5 performs the duty limit processing. After the step S104, the process proceeds to the step S201. When the power control unit 5 already performs the duty limit processing, the determination result in the step S101 is always "YES", and the processing always proceeds to the step S102 after the step S101.

In the step S201, it is determined whether or not the performing time of the failure determination routine is reached. Specifically, in the step S201, the abnormality detection unit 4 determines whether or not the current cycle is a preset failure determination cycle Te (second cycle). The failure determination cycle Te is an integral multiple (for example, several times to several tens of times) of the current detection cycle Ti. When the current cycle is not the failure determination cycle Te ("NO" in the step S201), the present flowchart is ended.

When the current cycle is the failure determination cycle Te ("YES" in the step S201), the processing proceeds to step a S202. In the step S202, the abnormality detection unit 4 determines whether or not the free run counter (FRC) and a free run counter (FRCpast) at the time when the previous failure determination routine is performed are the same.

When the free run counter (FRC) and the free run counter (FRCpast) at the time when the previous failure determination routine is performed are not the same ("NO" in the step S202), it is determined that the step S103 is performed one or more times after the previous failure determination routine is performed. In other words, it is determined that the absolute value Is is larger than the abnormality detection threshold value Ith in the step S102 one or more times (in other words, the abnormality is detected one or more times) after the previous failure determination routine is performed. In such case, there is a suspicion of failure, and the abnormality detection unit 4 increases an abnormality counter by 1 in a step S203. The processing then proceeds to a step S204.

In the step S204, the abnormality detection unit 4 determines whether or not the abnormality counter is greater than or equal to a failure confirmation threshold Nth value. When the abnormality counter is greater than or equal to the failure confirmation threshold Nth value ("YES" in the step S204), in a step S205, the abnormality detection unit 4 confirms the failure and outputs the failure confirmation flag to an external control device or the like.

When the abnormality counter is smaller than the failure confirmation threshold Nth value ("NO" in the step S204), the processing proceeds to a step S208.

When the free run counter (FRC) and the free run counter (FRCpast) at the time when the previous failure determination routine is performed are the same ("YES" in the step S202), the step S103 is not performed after the previous failure determination routine is performed. In other words, after the previous failure determination routine is performed, a state in which it is determined that the absolute value Is is less than or equal to the abnormality detection threshold value Ith is maintained in the step S102, and the abnormality is not continuously detected. In such case, there is no suspicion of failure, and the abnormality detection unit 4 sets the duty limit processing flag to "false" and outputs the duty limit processing flag to the power control unit 5 in a step S206. Accordingly, the power control unit 5 releases (ends) the duty limit processing. In addition, the abnormality detection unit 4 resets the abnormality counter, in a step S207. Thereafter, the processing proceeds to the step S208.

In the step S208, the abnormality detection unit 4 substitutes the free run counter (FRC) into the variable FRCpast, and ends the present flowchart.

As described above, the motor control device 100 according to the present embodiment includes the inverter circuit 1 that supplies power to the motor 3 having the winding wire of a plurality of phases, the power control unit 5, and the abnormality detection unit 4. The inverter circuit 1 has a plurality of high-potential-side switching elements 11u, 11v, and 11w and a plurality of low-potential-side switching elements 12u, 12v, and 12w, which are provided so as to correspond to each phase of the plurality of phases, and a plurality of current sensors 13u, 13v, and 13w, which are connected each to the plurality of low-potential-side switching elements 12u, 12v, and 12w. The power control unit 5 controls the plurality of high-potential-side switching elements 11u, 11v, and 11w and the plurality of low-potential-side switching elements 12u, 12v, and 12w based on the duty value. The abnormality detection unit 4 detects an abnormality by comparing the sum of the current values Iu, Iv, and Iw of the plurality of phases detected by using the plurality of current sensors 13u, 13v, and 13w when the plurality of low-potential-side switching elements 12u, 12v, and 12w are in the ON state, with the abnormality detection threshold value Ith, and determines a failure based on the number of times the abnormality is detected. The abnormality detection unit 4 compares the sum of the current values Iu, Iv, and Iw with the abnormality detection threshold value Ith for each current detection cycle Ti, which is a cycle for detecting the current values Iu, Iv, and Iw. When an abnormality is detected by comparing the sum of the current values Iu, Iv, and Iw with the abnormality detection threshold value Ith, the abnormality detection unit 4 causes the power control unit 5 to generate the limited duty value obtained by limiting the duty value to be less than or equal to the predetermined limit threshold value Duty_th such that the time during which all of the plurality of low-potential-side switching elements 12u, 12v, and 12w are in the ON state is greater than or equal to a time required for detecting the current values Iu, Iv, and Iw, and to perform duty limit processing that is processing of controlling the plurality of high-potential-side switching elements 11u, 11v, and 11w and the plurality of low-potential-side switching elements 12u, 12v, and 12w based on the limited duty value.

The abnormality detection unit 4 compares the sum of the current values Iu, Iv, and Iw with the abnormality detection threshold value Ith for each current detection cycle Ti, and, when an abnormality is detected by this comparison, causes the power control unit 5 to perform the duty limit processing. Accordingly, since the time during which all of the plurality of low-potential-side switching elements 12u, 12v, and 12w are in the ON state is greater than or equal to the time required for detecting the current values Iu, Iv, and Iw, although the output of the inverter circuit 1 is high, the current values Iu, Iv, and Iw of the plurality of phases may be reliably detected in the subsequent comparison. Therefore, it is possible to detect an abnormality based on the sum of the current values Iu, Iv, and Iw with high accuracy and without delay. In addition, as the duty limit processing, the limited duty value obtained by limiting the duty value to be less than or equal to the predetermined limit threshold value Duty_th is generated, and processing of controlling the plurality of high-potential-side switching elements 11u, 11v, and 11w and the plurality of low-potential-side switching elements 12u, 12v, and 12w based on the limited duty value is performed. Therefore, although the duty limit processing is performed, it is possible to suppress discomfort due to vibration or noise generated by the motor 3.

In addition, during normal operation in which the abnormality is not detected, the power control unit 5 controls the plurality of high-potential-side switching elements 11u, 11v, and 11w and the plurality of low-potential-side switching elements 12u, 12v, and 12w based on the duty value without limiting the duty value to be less than or equal to the limit threshold value Duty_th. Therefore, it is possible to prevent a decrease in the output of the motor 3 during normal operation.
As described above, it is possible to prevent a decrease in the output of the motor 3 in normal operation, and to detect an abnormality based on the sum of the current values Iu, Iv, and Iw with high accuracy and without delay while discomfort due to vibration or noise generated by the motor 3 is suppressed although the output of the inverter circuit 1 is high.

In addition, since the abnormality detection unit 4 determines a failure based on the number of times the abnormality is detected, it is possible to suppress the faulty determination of the failure caused by noise or the like.

In general, when failure occurs, the amplitude of the duty value tends to increase due to the action of the current control of the inverter circuit. When there is a time lag from the occurrence of the failure to the performing of the duty limit processing, the amplitude of the duty value is increased, so that it is more difficult to detect the current value of the plurality of phases. Conventionally, when it is possible to detect the current values of the plurality of phases, the inverter circuit is controlled by using the detected current values, and when it is not possible to detect the current value of any phase of the plurality of phases, the current value of the undetected phase is estimated from the current value of the detected phase, and the inverter circuit is controlled by using the estimated current value. In the control of the inverter circuit, when the use of the detected current value and the use of the estimated current value are alternately repeated, the current value fluctuates. For example, when the motor control device is applied to the electric power steering device, there is a possibility that steering feel deteriorates due to the fluctuation in the current value.

In the present embodiment, when an abnormality is detected, the abnormality detection unit 4 causes the power control unit 5 to immediately perform the duty limit processing. Therefore, by having the power control unit 5 reliably detect the current values Iu, Iv, and Iw of the plurality of phases by performing the duty limit processing without any time lag after the abnormality is detected, it is possible to suppress the fluctuation of the current value as described above, and it is possible to suppress the deterioration of the steering feel due to the fluctuation of the current value.

In addition, the abnormality detection unit 4 performs the failure determination for each failure determination cycle Te, and releases the duty limit processing when an abnormality is not continuously detected in the failure determination for each failure determination cycle Te.

As a result, although a faulty determination of no abnormality is made due to noise or the like even though a failure did occur, it is possible to suppress the duty limit processing from being released at an inappropriate time.

In addition, in the duty limit processing, the power control unit 5 generates the limited duty value by matching the duty value that is larger than the abnormality detection threshold value Ith with the abnormality detection threshold value Ith.

As a result, it is possible to suppress a decrease in the output of the motor 3 due to the duty limit processing.

### Second Embodiment

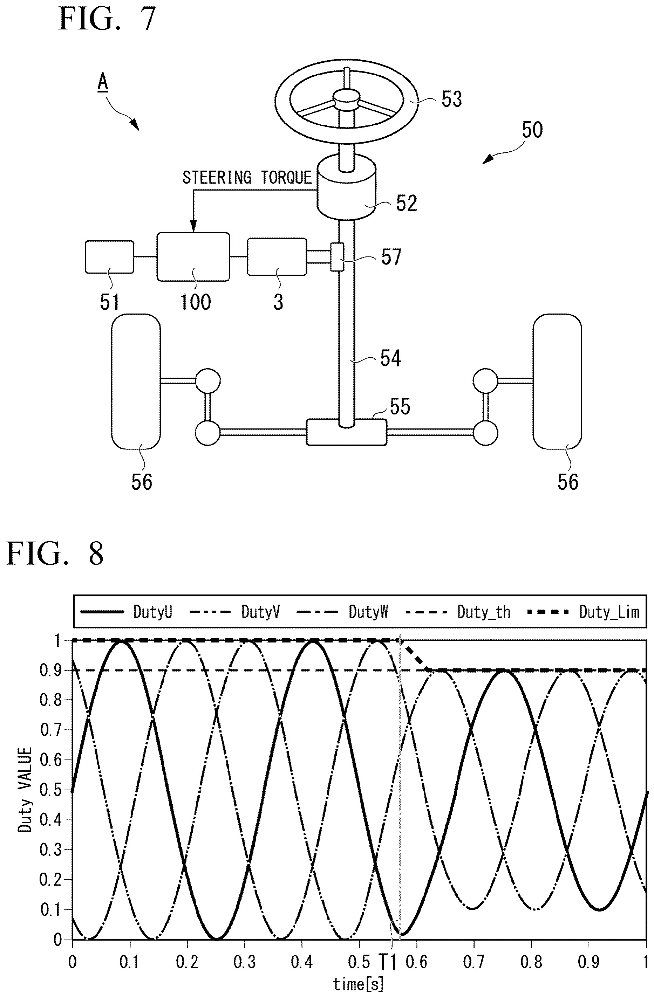

It is possible to apply the motor control device 100 according to the first embodiment to an electric power steering device for a vehicle. Hereinafter, an electric power steering device 50 and a vehicle A according to the second embodiment is described with reference to FIG. 7. Components having the same functions and operations as components in the first embodiment have the same reference signs affixed thereto, with explanations thereof being omitted.

As shown on FIG. 7, the vehicle A includes the electric power steering device 50, and a notification unit 51. The electric power steering device 50 includes the motor 3, the motor control device 100, a torque sensor 52, a steering wheel 53, a steering shaft 54, a rack and pinion gear 55, a wheel 56, and a reduction gear 57.

The steering wheel 53 is steered by a driver. The steering shaft 54 is connected to the steering wheel 53 and the rack and pinion gear 55. A steering torque applied to the steering wheel 53 by the driver is transmitted to the rack and pinion gear 55 via the steering shaft 54. The rack included in the rack and pinion gear 55 is connected to the wheel 56 via a tie rod and a knuckle arm. When the steering torque is transmitted to the rack, the tie rod pushes the knuckle arm in one wheel 56, and the tie rod pulls the knuckle arm in the other wheel 56. Accordingly, the wheel 56 is steered.

The motor 3 functions as a driving force source that assists steering of the steering wheel 53. Specifically, the motor 3 is connected to the steering shaft 54 via the reduction gear 57. A motor torque generated from the motor 3 is transmitted to the steering shaft 54 via the reduction gear 57, and reduces a steering force applied by the driver during steering.

The torque sensor 52 is attached to the steering shaft 54. The torque sensor 52 detects a steering torque applied to the steering shaft 54 when the driver steers the steering wheel 53. The torque sensor 52 outputs the detected steering torque to the motor control device 100.

In the motor control device 100, the duty value generation unit 7 generates a duty value by using the steering torque detected by the torque sensor 52 as an input. The duty value generation unit 7 outputs the generated duty value to the power control unit 5. The power control unit 5 drives the inverter circuit 1 based on the duty value. As a result, a current is supplied from the inverter circuit 1 to the motor 3, and the motor torque is generated.

The notification unit 51 is connected to the motor control device 100. The abnormality detection unit 4 outputs a failure confirmation flag to the notification unit 51 when a failure is confirmed. The notification unit 51 notifies the driver of the occurrence of the failure. For example, the notification unit 51 may include a display unit (not shown) and may display the occurrence of the failure on the display unit.

As described above, the electric power steering device 50 according to the present embodiment includes the motor control device 100, the motor 3 that assists in steering of the steering wheel 53, and the torque sensor 52 that detects the steering torque caused by steering of the steering wheel 53. The motor control device 100 controls the driving of the motor 3 according to the steering torque detected by the torque sensor 52.

In the electric power steering device 50, when a failure occurs during the traveling of the vehicle, the driver feels a large sense of discomfort. Therefore, when the failure occurs, it is desirable to quickly transition to control corresponding to an abnormal state, and it is desirable to accurately confirm the failure in a short amount of time. In addition, it is desirable to suppress the deterioration of the steering feel during the failure determination.

Since the motor control device 100 is provided in the electric power steering device 50, it is possible for the abnormality detection unit 4 to detect the abnormality with high accuracy and without delay, and to confirm the failure in a short amount of time and accurately. Therefore, when the failure occurs, it is possible to quickly transition to the control corresponding to the abnormal state, and it is possible to reduce the sense of discomfort felt by the driver. In addition, it is possible to suppress the deterioration of the steering feel during the failure determination.

In addition, the vehicle A according to the present embodiment includes the electric power steering device 50 and the notification unit 51 that notifies of the occurrence of the failure when the abnormality detection unit 4 confirms the failure.

Accordingly, when the failure occurs, it is possible to notify the driver of the occurrence of the failure.

### Third Embodiment

Next, a motor control device according to the third embodiment is described. Since the basic configuration of the motor control device according to the present embodiment is the same as that of the motor control device according to the first embodiment, explanations herein only focus on points of difference.

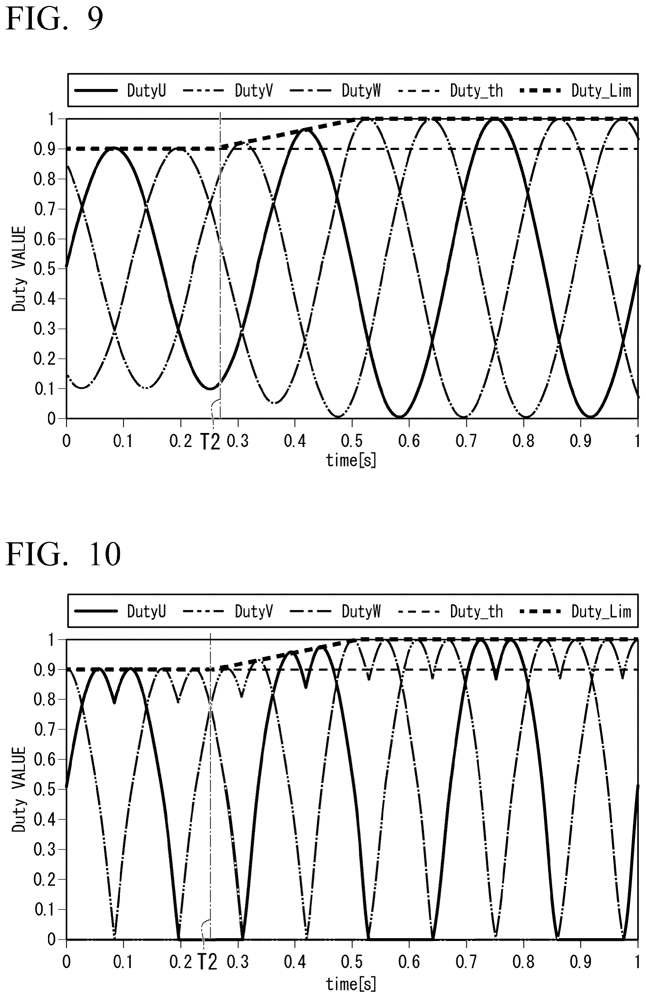

FIGS. 8 and 9 are diagrams showing an example of a duty value input to the PWM generation unit 23 in the third embodiment. In FIGS. 8 and 9, a horizontal axis indicates time, and a vertical axis indicates duty value. In the present embodiment, the duty limit unit 21 generates the limited duty value by performing amplitude reduction processing of reducing the amplitude of the duty value. Specifically, the duty limit unit 21 generates the limited duty value by multiplying the amplitude of the duty value with a coefficient Duty_Lim such that the maximum value of the limited duty value is less than or equal to the limit threshold value Duty_th. The coefficient Duty_Lim is less than 1, for example, 0.9. When the amplitude reduction processing is performed, the limited duty value changes in a sinusoidal wave shape as in the duty value. In addition, the vibration center of the limited duty value is maintained at 0.5.

The power control unit 5, gradually decreases the amplitude of the duty value by gradually decreasing the coefficient Duty_Lim from 1 at the start of the duty limit processing, instead of instantaneously changing the duty value, and gradually increases the amplitude of the duty value by gradually increasing the coefficient Duty_Lim to 1 at the end of the duty limit processing.

In the example of FIG. 8, the duty limit processing is not performed from time 0 seconds to time T1 (around 0.57 seconds), and the duty limit processing is started at time T1. In addition, the amplitude of the duty value of all the phases is gradually decreased by gradually decreasing the coefficient Duty_Lim from time T1. In addition, in the example of FIG. 9, the duty limit processing is performed from time 0 seconds to time T2 (around 0.25 seconds), and the release of the duty limit processing is started at time T2. In addition, the amplitude of the duty value of all the phases is gradually increased by gradually increasing the coefficient Duty_Lim from time T2.

As described above, in the present embodiment, in the duty limit processing, the power control unit 5 generates the limited duty value by multiplying the amplitude of the duty value by the coefficient Duty_Lim such that the maximum value of the limited duty value is less than or equal to the limit threshold value Duty_th.

Accordingly, the same waveform as the duty value is also maintained with respect to the limited duty value. For example, when the duty value is in a sinusoidal wave shape, the limited duty value is also in a sinusoidal wave shape. Therefore, it is possible to suppress the harmonic oscillation component synchronized with the rotation of the motor 3, from occurring in the motor torque generated based on the limited duty value. As a result, for example, when the motor control device 100 is used in the electric power steering device 50, it is possible to effectively suppress the deterioration of the steering feel during the failure determination.

In addition, the power control unit 5 gradually decreases the coefficient Duty_Lim to 1 at the start of the duty limit processing, and gradually increases the coefficient Duty_Lim to 1 at the end of the duty limit processing.

Accordingly, it is possible to suppress the fluctuation of the motor torque at the start and end of the duty limit processing. As a result, for example, when the motor control device 100 is used in the electric power steering device 50, it is possible to more effectively suppress a deterioration of the steering feel during the failure determination.

With respect to the speed at which the coefficient Duty_Lim (the amplitude of the duty value) is gradually increased or gradually decreased, the amount of change in the gradual increase or gradual decrease of the coefficient Duty_Lim (the amplitude of the duty value) per unit time may be set in consideration of the time (fault tolerant time interval) allowed from the viewpoint of functional safety or the amount of change in the motor torque allowed from the viewpoint of steering feel. When the maximum value of the duty value is less than or equal to the limit threshold value Duty_th even in a state where the duty limit processing is not being performed, it is not necessary to limit the duty value to be less than or equal to the limit threshold value Duty_th. As such, the maximum value of the duty value may be compared with a predetermined gradual increase and gradual decrease start threshold value, and when the maximum value of the duty value is larger than the gradual increase and gradual decrease start threshold value, the gradual increase and gradual decrease of the coefficient Duty_Lim (the amplitude of the duty value) may be started. In such case, the limit threshold value Duty_th may be used as the gradual increase and gradual decrease start threshold value. Alternatively, in order to more gradually increase and gradually decrease the coefficient Duty_Lim (the amplitude of the duty value) in a more gentle manner, a value (for example, 0.8) smaller than the limit threshold value Duty_th may be used as the gradual increase and gradual decrease start threshold value.

### Fourth Embodiment

Next, a motor control device according to the fourth embodiment is described. Since the basic configuration of the motor control device according to the present embodiment is the same as the configuration of the motor control device according to the third embodiment, explanations herein only focus on points of difference.

FIG. 10 is a diagram showing an example of a duty value input to the PWM generation unit 23 in the fourth embodiment. **In** FIG. 10, a horizontal axis represents time, and a vertical axis represents a duty value. **In** the present embodiment, as a method of modulating the duty value, two-phase modulation is performed by performing offset processing such that the minimum value of the duty value of all the phases matches 0. The duty limit unit 21 limits the duty value to be less than or equal to the limit threshold value Duty_th with respect to the duty value subjected to the two-phase modulation. Further, in the present embodiment, similarly to the third embodiment, the duty limit unit 21 generates the limited duty value by multiplying the amplitude of the duty value with the coefficient Duty_Lim such that the maximum value of the limited duty value is less than or equal to the limit threshold value Duty_th. As a result, since it is possible to suppress a decrease in voltage utilization as compared to a case where the duty value which is not subjected to the two-phase modulation is used, although the duty limit processing is performed, it is possible to more effectively suppress a decrease in the output of the motor 3.

The technical scope of the present disclosure is not limited to the embodiments described above, and various modifications may be made without departing from the technical scope of the present disclosure.

For example, in the first embodiment, the duty limit unit 21 generates the limited duty value by performing the clipping processing of matching the duty value larger than the limit threshold value Duty_th with the limit threshold value Duty_th. In the third and fourth embodiments, the duty limit unit 21 generates the limited duty value by performing the amplitude reduction processing of reducing the amplitude of the duty value. However, the generation of the limited duty value by the duty limit unit 21 is not limited thereto. For example, the duty limit unit 21 may generate the limited duty value by superimposing an offset voltage on the duty value of all the phases such that the maximum value of the limited duty value is less than or equal to the limit threshold value Duty_th.

The duty limit unit 21 may limit the duty value to be less than or equal to the limit threshold value Duty_th with respect to the duty value subjected to the space vector modulation.

The above-described embodiment described that the duty value generation unit 7 is included in the motor control device 100. However, the duty value generation unit 7 may be provided outside the motor control device 100.

In addition, the abnormality detection unit 4 may record the detection of the abnormality in a recording medium (not shown) as a log. In the above-described embodiment, when an abnormality is not continuously detected in the failure determination for each failure determination cycle Te, the abnormality detection unit 4 determines that there is no suspicion of failure and releases the duty limit processing. However, in a case where the abnormality is detected again after the first abnormality is detected, although not continuously, or the like, it may be desirable to perform maintenance on the motor control device 100 and the motor 3. For example, in a case of maintenance of the vehicle A, the operator may check the log and determine whether or not the maintenance of the motor control device 100 and the motor 3 is necessary.

In addition, when the power control unit 5 performs the duty limit processing, the abnormality detection unit 4 may notify a control device that is in a higher level than the motor control device 100 that the duty limit processing is performed. The higher-level control device is, for example, a control unit that controls the vehicle A. Accordingly, it is possible for the higher-level control device to perform control which corresponds to the duty limit processing, while the duty limit processing is being performed.

The function of the motor control device 100 described above is realized by, for example, a processor such as a central processing unit (CPU) executing a program stored in a program memory. Some or all of the aforementioned functions may be realized by hardware such as large scale integration (LSI), application specific integrated circuit (ASIC), or field-programmable gate array (FPGA), or may be realized by a collaboration between software and hardware.

The program for realizing the function of the motor control device 100 described above is recorded on, for example, a computer-readable recording medium. The program may cause a computer to read and execute the program recorded on this recording medium to perform the processing in the motor control device 100 described above. Here, "causing a computer to read and execute the program recorded on this recording medium" includes installing the program in the computer. The term "computer" mentioned here includes hardware such as an OS and a peripheral device.

In addition, the "computer" may include a plurality of computer devices connected via a network including a communication line such as the Internet, a WAN, a LAN, and a dedicated line. The term "computer-readable recording medium" refers to a storage device, for example, a portable medium such as a flexible disk, a magneto-optical disk, a ROM, or a CD-ROM, and a hard disk built in a computer. Accordingly, the recording medium on which the program is stored may be a non-transitory recording medium such as a CD-ROM.

Furthermore, the recording medium also includes an internal or external recording medium that is accessible by a distribution server for distributing the program. The program may be divided into a plurality of parts, and the parts may be downloaded at different times to then be combined in the motor control device 100. Furthermore, the distribution servers that distribute each of the divided programs may be different from each other.

The term "computer-readable recording medium" includes a medium that holds the program for a certain period of time, such as a volatile memory (RAM) inside the computer that serves as a server or a client when the program is transmitted via a network. In addition, the program described above may be a program for realizing some of the functions described above. Furthermore, the program described above may be a so-called difference file (difference program). The difference program realizes the functions described above in combination with a program already recorded in the computer.

In addition, the above-described embodiments or modification examples may be suitably combined.

### Reference Signs List

100... Motor Control Device, 1... Inverter Circuit, 3... Motor, 4... Abnormality Detection Unit, 5...Power Control Unit, 11u, 11v, 11w...High-Potential-Side Switching Element, 12u, 12v, 12w... Low-potential-side switching element, 13u, 13v, 13w... Current sensor, 21...Duty Limit Unit, 22...Selection Unit, 23...PWM Generation Unit, 50... Electric Power Steering Device, 52... Torque Sensor, 53...Steering Wheel, A... Vehicle

## Claims

1. A motor control device comprising:
an inverter circuit configured to supply power to a motor having a winding wire of a plurality of phases, the inverter circuit including a plurality of high-potential-side switching elements and a plurality of low-potential-side switching elements that are provided corresponding to each phase of the plurality of phases, and a plurality of current sensors that are each connected to the plurality of low-potential-side switching elements;
a power control unit configured to control the plurality of high-potential-side switching elements and the plurality of low-potential-side switching elements based on a duty value; and
an abnormality detection unit configured to detect an abnormality by comparing a sum of current values of the plurality of phases detected by using the plurality of current sensors when the plurality of low-potential-side switching elements are in a conductive state, with a first threshold value and to determine a failure based on the number of times the abnormality is detected; wherein
the abnormality detection unit compares the sum of the current values with the first threshold value, for each first cycle that is a current value detection cycle, and,
when the abnormality is detected by comparing the sum of the current values with the first threshold value, the abnormality detection unit causes the power control unit to generate a limited duty value that limits the duty value to be less than or equal to a predetermined upper limit value such that a time during which all of the plurality of low-potential-side switching elements are in the conductive state is greater than or equal to a time required for detecting the current value and to perform duty limit processing that is processing of controlling the plurality of high-potential-side switching elements and the plurality of low-potential-side switching elements based on the limited duty value.

2. The motor control device according to Claim 1, wherein
the abnormality detection unit performs failure determination for each second cycle that is longer than each of the first cycle, and releases the duty limit processing when the abnormality is not continuously detected in the failure determination for each of the second cycle.

3. The motor control device according to Claim 1 or 2, wherein
the power control unit generates the limited duty value by matching the duty value larger than the upper limit value with the upper limit value, in the duty limit processing.

4. The motor control device according to Claim 1 or 2, wherein
the power control unit generates the limited duty value by multiplying an amplitude of the duty value by a coefficient such that a maximum value of the limited duty value is less than or equal to the upper limit value, in the duty limit processing.

5. The motor control device according to Claim 4, wherein
the power control unit gradually decreases the coefficient from 1 at a start of the duty limit processing and gradually increases the coefficient to 1 at an end of the duty limit processing.

6. An electric power steering device comprising:
the motor control device according to any one of Claims 1 to 5;
the motor configured to assist steering of a steering wheel; and
a torque sensor configured to detect a steering torque caused by steering of the steering wheel, wherein
the motor control device controls driving of the motor according to the steering torque detected by the torque sensor.

7. A vehicle comprising:
the electric power steering device according to Claim 6; and
a notification unit configured to notify of an occurrence of a failure when the abnormality detection unit confirms the failure.
